# EUROPEAN PATENT SPECIFICATION

(11) **EP 1 786 152 B1**
(45) Date of publication and mention of the grant of the patent: **19.05.2010**
(21) Application number: 06017175.8
(22) Date of filing: 17.08.2006
(51) Int. Cl.: H04L 12/56

(54) **Pathway selection by sending test packets and analysis of diverging sub-pathways**
Wegewahl durch Versand von Testpaketen und Auswertung von unterschiedlichen Teilwegen
Cheminement par envoi de paquets de test et évaluation de voies partielles différentes

(30) Priority: 14.11.2005 US 736889 P; 07.02.2006 US 349292; 07.02.2006 US 348632; 01.03.2006 US 365102; 30.03.2006 US 393481
(43) Date of publication of application: 16.05.2007
(73) Proprietor: Broadcom Corporation, Irvine, CA 92617 (US)
(72) Inventor: Bennett, James D., San Clemente CA 92672 (US)
(74) Representative: Jehle, Volker Armin

(56) References cited:
- EP-A- 0 963 082
- WO-A-2004/023740
- WO-A-2004/097594
- US-A1- 2005 185 621
- US-A1- 2005 185 632

## Description

### CROSS-REFERENCE TO RELATED APPLICATIONS/INCORPORATION BY REFERENCE

This application is a continuation-in-part of the following co-pending applications:

Utility Application Serial No. 11/348,632, filed on February 7, 2006, and entitled "COMMUNICATION DEVICE SUPPORTING BOTH INTERNET AND PUBLIC SWITCHED TELEPHONE NETWORK TELEPHONY";

Utility Application Serial No. 11/349,292, filed on February 7, 2006, and entitled "VOICE COMMUNICATION DEVICE WITH PSTN AND INTERNET PATHWAY ANALYSIS, SELECTION AND HANDOFF"; and

Utility Application Serial No. 11/365,102, filed on March 1, 2006, and entitled "MULTIPLE NODE APPLICATIONS COOPERATIVELY MANAGING A PLURALITY OF PACKET SWITCHED NETWORK PATHWAYS".

This application claims priority to U.S. Provisional Application Serial No 60/736,889, filed November 14, 2005.

This application is related to and filed on even date herewith with Utility Application Serial No. 11/xxx,xxx, entitled "NETWORK NODES COOPERATIVELY ROUTING TRAFFIC FLOW AMONGST WIRED AND WIRELESS NETWORKS".

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

**1. Field of the Invention**

This invention generally relates to communication systems.

**2. Related Art**

Public switched telephone network and Internet telephony voice communication devices are in wide spread use. A public switched telephone network telephony voice communication device uses a desktop or cordless telephone to make calls to a remote terminal. Further, cell phones utilize cellular networks and public switched telephone network to make calls to distant remote terminals. In most of these cases, the voice packets are exchanged between two or more telephony devices using any available communication pathways.

Internet voice communication utilizes computers and Internet connections to make calls to remote locations. Internet voice communication devices include a personal or laptop computer, a headset, and microphone or stand alone Internet phones. Typically, Internet phones allow the users to make calls to a remote desktop, cordless or cell phone. Further, other end-point devices such as a personal computer, server, set top box, handheld data/communication device, client device etc. exchange data packets using any available Internet communication pathways.

In all of these cases of voice or data traffic between devices, the communication pathways remain hidden from the users, for the most part. The reason for this is to remove end-point devices, access points, and Internet service providers from getting involved with packets delivery. To combat malfunctions, redundancy was built in so that many possible pathways lead in and out of Internet backbone.

As a result, a single malfunction in an end-point device, access point or Internet service provider's equipment and associated links can disable a pathway. Network congestions at various access points and nodes during peak hours often create undesirable delays along certain pathways all the while increasing error rates. Similar problems arise when certain links have bandwidth limitations or low signal strength limitations. Further, in current Internet system, Quality of Service (QOS) and throughput guarantees are not provided for voice, video, and/or data traffic.

Further limitations and disadvantages of conventional and traditional approaches will become apparent to one of ordinary skill in the art through comparison of such systems with the present invention.

EP 0 963 082 discloses the transmission of voice packets over multiple paths.

### BRIEF SUMMARY OF THE INVENTION

The present invention is directed to apparatus and methods of operation that are further described in the following Brief Description of the Drawings, the Detailed Description of the Invention, and the Claims.

In accordance with the present invention, a communication network allows communication pathways to be analyzed and controlled. The network consists of a packet switched infrastructure comprising a backbone network, a first end-point device, a second end-point device. The first end-point device is communicatively coupled to the packet switched network via at least a first access point and the second end-point device is communicatively coupled to the packet switched network via at least a second access point. The first end-point device sends test packets to the packet switched infrastructure to identify diverging sub-pathways and selects a communication pathway between the first end-point device and the second end-point device, the selected communication pathway consisting at least one of the identified diverging sub-pathways. In response to the sending of test packets, the access points, nodes in the packet switched infrastructure and the second end-point device send back echo response to the first end-point device. The first end-point device analyzes these retrieved echo responses, selects a communication pathway, and directs all of the future communication with the second end-point device along the selected pathway. For this, the first end-point device inserts control commands in the header of the voice, other media or data packets which guide each access point or node to direct these packets along the selected pathway. In another embodiment, while exchanging packet payload via the packet switched infrastructure, the first end-point device and the second end-point device impose very little divergence and convergence limitations. All diverging and converging first payload packets, excluding those that reach the destination of the first end-point device or the second end-point device, are discarded by the nodes and the access points.

An end-point device constructed according to the present invention, consisting a plurality of Internet interface circuitries, plurality of public switched telephone network interface circuitries, user interface circuit, processing circuitry communicatively coupled to both the Internet interface and the user interface circuit and storage unit comprising pathway analysis and pathway control software. By sending a first test packet, the processing circuitry analyzes divergence and convergence of the communication pathways and by the analysis of the communication pathway, the processing circuitry selects a communication pathway.
According to an aspect of the invention, a telephone network is provided according to claim 1.Advantageously, the interaction by the first end-point device with the packet switched infrastructure comprising sending at least one test packet.
Advantageously, the sending of the at least one test packet results in delivery of diverging sub-pathway characteristics.
Advantageously, the selection by the first end-point device of the at least one communication pathway is based at least in part on the diverging sub-pathway characteristics.
Advantageously, the interaction by the first end-point device with the packet switched infrastructure comprising sending at least one packet via the first access point, and the backbone network copies the at least one packet upon detecting the diverging sub-pathways.
Advantageously, the at least one packet comprises a voice packet with header directing the copying.
Advantageously, the at least one communication pathway selected by the first end-point device comprising a first communication pathway and a second communication pathway, the first communication pathway comprising a first of the diverging sub-pathways, and the second communication pathway comprising a second of the diverging sub-pathways..
Advantageously, the packet switched network copies payload packets to accommodate delivery via both the first communication pathway and the second communication pathway.
Advantageously, the sending of the at least one test packet is periodically repeated.
Advantageously, the sending of the at least one test packet occurs before call setup.
Advantageously, the sending of the at least one test packet upon detecting a communication deficiency.
Advantageously, the sending of the at least one test packet is initiated by a user of the first end-point device.
Advantageously, a user directs the selection by the first end-point device of the at least one communication pathway.
Advantageously, the second end-point device at least assists in the selection by the first end-point device of the at least one communication pathway.
Advantageously, the payload packets together comprise a payload packet sequence at the first end-point device, and the second end-point device reproduces the payload packet sequence based on receipts from the first communication pathway and the second communication pathway.
Advantageously, the identification of the diverging sub-pathways comprising limiting an amount of divergence via a header field.
According to an aspect of the invention, an Internet telephony network is provided comprising:
a packet switched infrastructure comprising a plurality of Internet network nodes, each of the plurality of Internet network nodes having a plurality of output ports;
a first end-point device that both generates a voice packet sequence and delivers the voice packet sequence to the packet switched network, the voice packet sequence comprising a plurality of packets, and each of the plurality of packets comprising pathway control information;
a first of the plurality of Internet network nodes receives one of the plurality of packets, and, based on the pathway control information of the one of the plurality of packets received, the first of the plurality of Internet network nodes copies and delivers the one of the plurality of packets to at least two of the plurality of output ports of the first of the plurality of Internet network nodes;
a second end-point device, communicatively coupled to the packet switched network, that receives the copies of the one of the plurality of packets via the at least two of the plurality of output ports; and
the second end-point device reconstructs the voice packet sequence based at least in part on a portion of the copies of the one of the plurality of packets received.
Advantageously, the reconstruction by the second end-point device comprising using a first received one of the copies of the one of the plurality of packets.
Advantageously, a second of the plurality of Internet network nodes receives one of the copies of the one of the plurality of packets, and, based on the pathway control information of the one of the copies of the one of the plurality of packets received, the second of the plurality of Internet network nodes further copies and delivers the one of the copies of the one of the plurality of packets to at least two of the plurality of output ports of the second of the plurality of Internet network nodes.
Advantageously, a third of the plurality of Internet network nodes refrains from copying based on the pathway control information.
According to an aspect of the invention, a method used by a first end-point device and a second end-point device is provided, according to claim 4. Advantageously, the telephony network comprising an Internet network.
Advantageously, the one of the copies of the voice packet received comprising a first received of the copies of the voice packet.
According to an aspect of the invention, a method used by a first end-point device and a second end-point device to exchange a media packet in an Internet network is provided, the Internet network have a network node with a plurality of output ports, the method comprising:
constructing, by the first end-point device, a test packet, the test packet comprising a divergence instruction for the network node that directs forwarding of copies of the test packet through each of the plurality of output ports;
delivering, by the first end-point device, the test packet to the Internet network;
receiving, by the second end-point device, the copies of the test packet from the Internet network;
selecting a pathway within the Internet network based at least in part on an analysis of the copies of the test packet; and
constructing a media packet, the media comprising a pathway instruction for the network node that directs forwarding of the media packet through one of the plurality of output ports in conformance with the pathway selected.
According to an aspect of the invention, a method used by a first end-point device to deliver a media packet to a second end-point device in an Internet network is provided, the Internet network have a network node, the method comprising:
constructing a test packet that comprises a divergence instruction for the network node;
delivering the test packet to the Internet network;
receiving a plurality of pathway characteristics from the Internet network in response to the delivery of the test packet;
selecting a route pathway based on the plurality of pathway characteristics;
constructing a media packet that comprises a routing instruction for the network node to control forwarding of the media packet in conformance with the route pathway; and
delivering the media packet to the Internet network.
Advantageously, the test packet carries no payload data.
Advantageously, the test packet comprises a prior media packet.
According to an aspect of the invention, a method used by a first end-point device and a second end-point device to exchange a media packet sequence in an Internet network is provided, the Internet network have a network node with a plurality of output ports, the method comprising:
constructing, by the first end-point device, the media packet sequence, each packet of the media packet sequence comprising an instruction for the network node that directs forwarding of copies of the packet through each of the plurality of output ports;
delivering, by the first end-point device, the media packet to the Internet network;
receiving, by the second end-point device, the copies of each packet of the media packet sequence from the telephony network; and
reconstructing, by the second end-point device, the media packet sequence based on at least a portion of the copies of each packet of the media packet sequence received.

Features and advantages of the present invention will become apparent from the following detailed description of the invention made with reference to the accompanying drawings.

### BRIEF DESCRIPTION OF THE DRAWINGS

**FIG. 1** is a schematic block diagram of a communication infrastructure that allows controlling of pathways, built in accordance with the present invention, illustrating a plurality of end-point devices, that perform analysis, selection and control of communication pathways;

**FIG. 2** is another schematic block diagram of a communication infrastructure that allows controlling of pathways, illustrating a plurality of end-point devices, that perform analysis, selection and control of communication pathways;

**FIG. 3** is a block diagram illustrating an end-point device circuitry constructed in accordance with the embodiments of **FIGs. 1** and/or **2** of the present invention;

**FIG. 4** is a block diagram illustrating detailed contents of storage in the end-point device circuitry shown in **FIG. 3** of the present invention;

**FIG. 5** is a flow diagram illustrating the method performed by an end-point device perform analysis, selection and control of communication pathways, during an operation of analysis and selection of Internet communication pathways;

**FIG. 6** is a flow diagram illustrating the method performed by an end-point device during an operation of analysis and selection of Internet communication pathways shown in **FIG. 5**, with analysis of pathways shown in detail;

**FIG. 7** is a flow diagram illustrating the method performed by an end-point device during an operation of control of Internet communication pathways;

**FIG. 8A** is a block diagram illustrating an embodiment of flow of control command packets during pathway analysis from a first end-point device to a second end-point device, a support/testing device or a legacy device, in a communication infrastructure consisting access points (AP) and nodes; and

**FIG. 8B** is a block diagram illustrating an embodiment of flow of echo response packets during pathway analysis from a support/testing device, nodes or access points (AP) to a first end-point device, in a communication infrastructure.

### DETAILED DESCRIPTION OF THE INVENTION

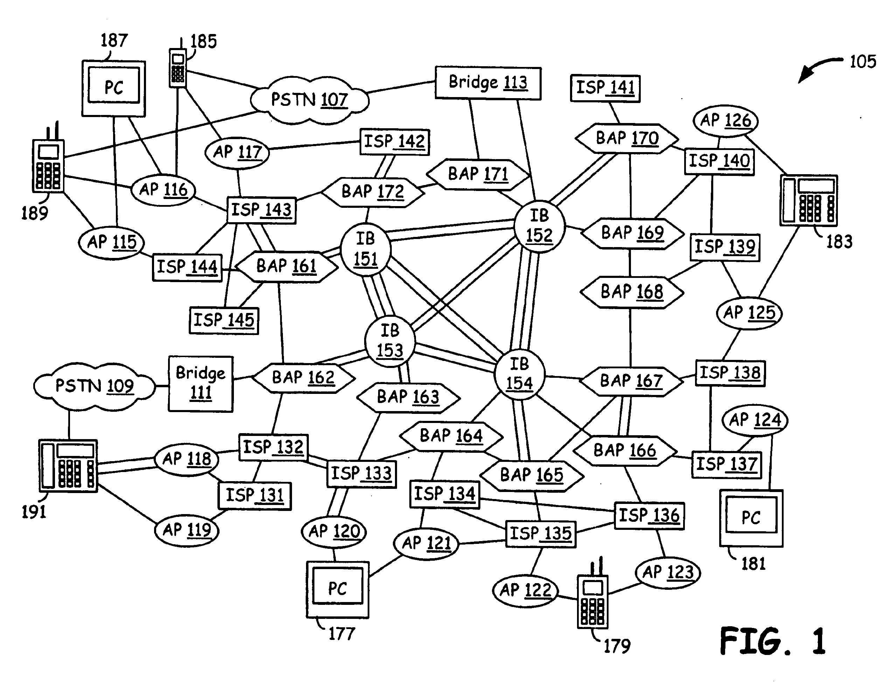

**FIG. 1** is a schematic block diagram of a communication infrastructure 105 that allows controlling of pathways, built in accordance with the present invention, illustrating a plurality of end-point devices that perform analysis, control, and selection of communication pathways. In the illustrated communication infrastructure 105 that allows controlling of communication pathways, a plurality of end-point devices such as desktop phones 183 and 191, personal computers 177, 181 and 187, mobile phone 185, dual phones 189 and 179 are connected to the communication network. These end-point devices 183, 191, 177, 181, 187, 185, 189, and 179 communicatively couple to plurality of Public Switched Telephone Network (PSTN) 107, 109, or Internet Service Providers (ISP) 131 through 145 via access points 115 through 126. Further, a plurality of Backbone Access Points (BAP) 161 through 172 communicatively couples the ISPs 131 through 145 to Internet Backbone Core (IB) 151, 152, 153 and 154. Bridges such as bridge 113 communicatively couple public switched telephone network to the Backbone Access Points or the Internet Backbone Core.

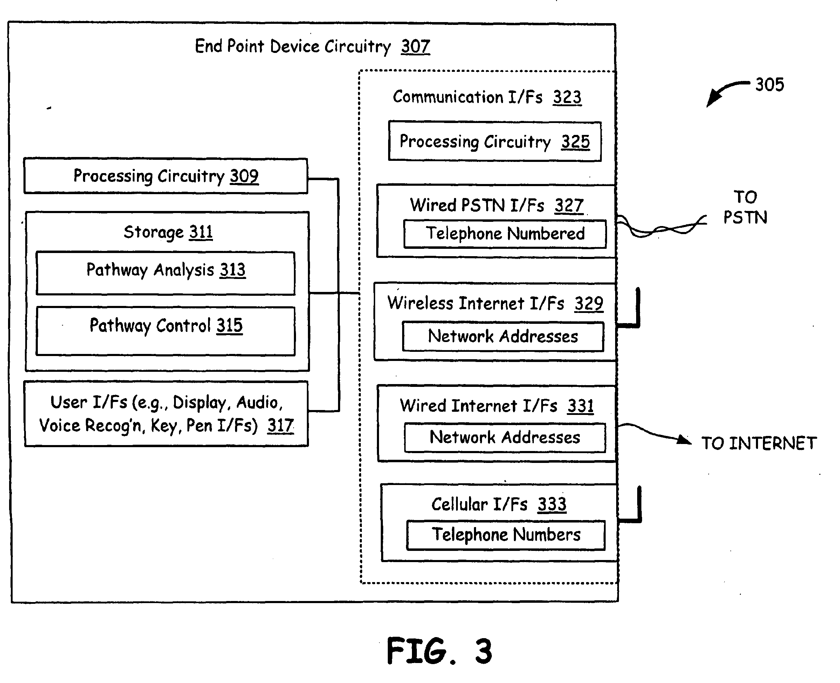

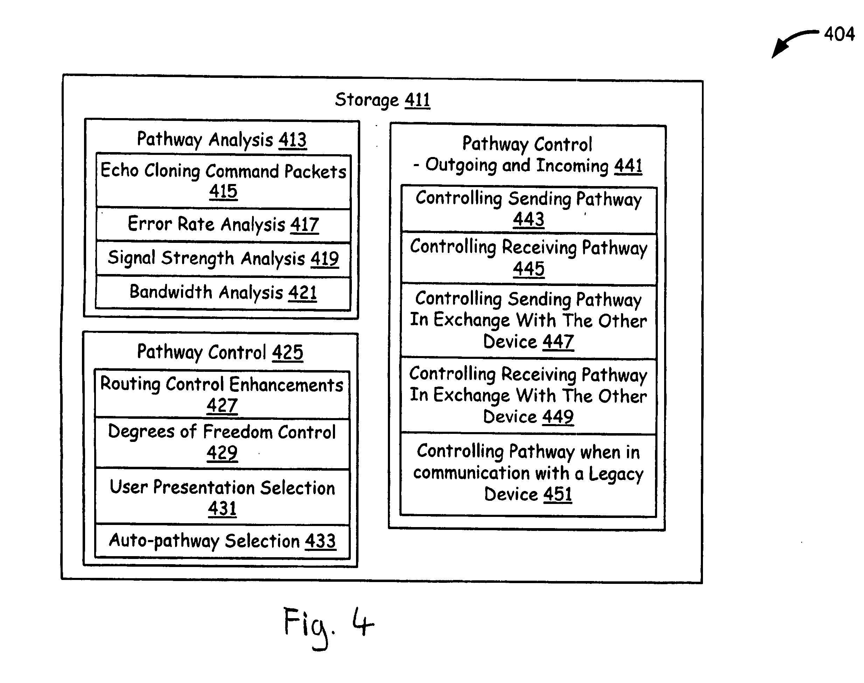

The access points 115 through 126 allow end-point devices 183, 191, 177, 181, 187, 185, 189, and 179 to access Internet functionality to the Internet service providers 127 and 133. The end-point devices 183, 191, 177, 181, 187, 185, 189 and 179 constructed according to the present invention may have single functionality in that they communicatively couple to either PSTN service providers 107, 109 alone or Internet service providers 131 through 145 alone, and communicate using either of packet switched and public switched telephone networks. Alternatively, as illustrated, end-point devices 191, 185 and 189 may have dual functionality in that they communicatively couple to both of PSTN service providers such as 107, 109, and Internet service providers such as 131 through 145, and communicate using either packet switched or public switched telephone networks. Each of the end-point devices 183, 191, 177, 181, 187, 185, 189 and 179 incorporates at least one processing circuitry, a plurality of communication interfaces and a built-in storage, which are further described with reference to **FIGs. 3** and **4****.**

The network underlying the communication infrastructure 105 provides pluralities of available pathways between the end-point devices 183, 191, 177, 181, 187, 185, 189, and 179 via pluralities of network node combinations and via pluralities of ports thereof. For example, a first of many pathways between the end-point devices 183 and 191 involves the AP 125, ISP 138, BAP 167, IB 154, IB 153 (via one of two possible links), BAP 162 (via one of two possible links) and AP 118 (via one of two possible links). Alternates also include the AP 126, ISP 140, BAP 169, IB 152, IB 151 (via one of two possible links), BAP 161 (via one of two possible links), BAP 162, ISP 132, and AP 118. Many other possible pathways that may or may not converge with others are possible. As any of the end-point devices, the end-point devices 183 and 191 (and underlying communication application software) are adapted to participate in the identification of such available pathways, retrieval of pathway characteristics regarding such pathways, and selection of one or more of such pathways to support the voice, other media and data exchanges. Each of the end-point devices are also adapted to operate with end-point devices that do not have such adaptations (i.e., legacy devices).

From any node in the network infrastructure, a pathway from a source end-point device may repeatedly diverge (at each network node) before converging on a destination end-point device. To perform divergence, a network node that receives a packet sends a copy of the received packet through a plurality of output ports. Divergence involves sending such copies through at least two or more output ports, instead of merely through one. Depending on the underlying divergence instruction, divergence may involve sending copies through: 1) two or more ports specifically identified in the test packet header; 2) all ports other than the one through which the packet was received; and 3) only through those ports that lead to the destination as identified via local routing tables that support multiple upstream and/or downstream routing path entries corresponding to a root node or a destination address. To control looping (or take control) and extreme fan-out, a degree of freedom limit of various types may be applied. For example, each copy may indicate in the header that further copying is not permit, e.g., via a "zero" in a copy count field. Likewise, a copy count can be added and decremented each time a copy is made. Upon reaching zero, no further copies may be made. This copy count and decrementing function can follow the main packet only or follow the diverging copies as well.

As the test packet (which may or may not include typical data payload) spans from the source end-point device the through the network infrastructure 105 to the destination device, all network nodes respond to underlying pathway characteristic gathering and delivery instructions, whether or not they are active in the diverging process. As mentioned, depending on the underlying instruction, the pathway characteristics may be added to the test packet and/or sent in separate one or more packets back to the source end-point device and/or to the destination end-point device. The destination end-point device may also participate by responding to the characteristics instructions by communications back to the source end-point device. Part of the pathway characteristics involves the identity of various network nodes in each pathway and diverging sub-pathways. By analyzing all of such characteristics, the source end-point device and the destination end-point device either solely or jointly make pathway decisions. Other network nodes could also make such decisions with or without participation by either or both of the source and destination end-point devices.

Test packets may be periodically delivered for selected pathway confirmation or reselection. Test packets may also be sent at or before the beginning of a packet exchange session. In an ongoing media stream or data exchange, any one or more payload packets can be used as test packets by merely including the test commands (e.g., divergence and characteristics gathering instructions).

Once one or more pathways are selected, subsequent packets are configured with routing information that specifically identifies the particular pathway(s) from the plurality of those available. The network infrastructure 105 delivers such packet following the provided routing information. For payload routing, multiple pathways can be simultaneously selected from those available for each packet. Multiple pathway selection can be used for various reasons such as to improve the overall quality of service. For example, to address random and excessive delays, a destination end-point device might use the first of many packets that accurately arrives while discarding ones with errors and late corners. Alternatively, the first two or more packets received might be used to confirm or generate a single accurate packet. A sequence of packets, e.g., a voice stream, might follow different selected pathways on a packet-by-packet basis, with each packet following a single path. The destination end-point device or any other supporting network node could then reconstruct the sequence of packets there from.

The processing circuitry in conjunction with communication interfaces and storage both analyses the communication pathways and controls the communication pathways by being able to select a chosen communication pathway and establishing communication via that pathway. The end-point devices 183, 191, 177, 181, 187, 185, 189 and 179 described in this invention not only pertain to voice communications but also to all types of media and data traffic such as computer file transfers, video and text traffic. In any of these situations involving voice, other media and/or data traffic, the end-point devices are able to select one or more communication pathways and utilize those pathways for voice, other media and data transfer.

The pathway analysis may be performed by an end-point device during certain occasions such as before placing a call, when a user initiates a pathway analysis process or when an error is detected in the data packets during a voice communication. Similarly, in case of video, text and data traffic, the pathway analysis may be performed based on the detection of an error in data packets along a given communication pathway, before beginning of transfer of a set of data packets or when a user initiates such a process.

The voice or data communication may occur between any of the two devices, for example, between a first end-point device and a second end-point device. Though the following descriptions of pathway analysis, pathway selection and pathway control focuses on voice or other media and data packets exchange between the first end-point device and the second end-point device, it is not necessarily restricted to two end-point devices, there may be more than three end-point devices exchanging information. Further, the end-point devices are not limited to the ones illustrated, may also include other devices such as servers, handheld audio/video gaming and entertainment equipment.

When an occasion for pathway analysis arises, the processing circuitry of the first end-point device constructs one or more test packets containing instructions for pathway divergence and/or pathway characteristics collection and reporting, e.g., an echo cloning command packet. Such test packets may or may not contain payload data. The test packets may be directed to any one or more network nodes in the Internet network and/or to another end-point node. No matter where the test packets are directed, each network node in the Internet network that encounters the test packet consider whether it is a target of the underlying instruction(s), and, if so, carries out the requested functionality.

Specifically, in addition to a destination routing address, a header of the test packet includes: 1) network address of the network node target(s) of the underlying instruction(s), i.e., of a particular network node, a plurality of particular network nodes, or all network nodes that encounter the test packet; 2) one or more divergence instructions; and 3) one or more pathway characteristics collection and reporting instructions. Divergence instructions will be interpreted by a network node target as an instruction to copy such packet into some or all diverging sub-pathways available to the network node target. Pathway characteristics include any characteristic that might be used in the selection of a pathway through the Internet network, e.g., error rate, signal strength, bandwidth limitations, quality of service, current and historical loading, number of nodes in the overall pathway, link costs, etc.

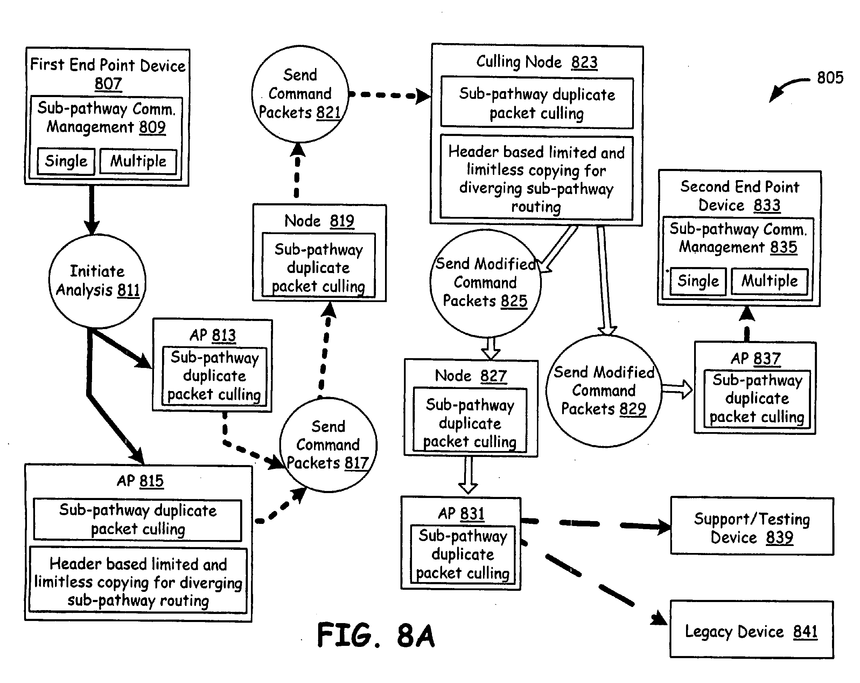

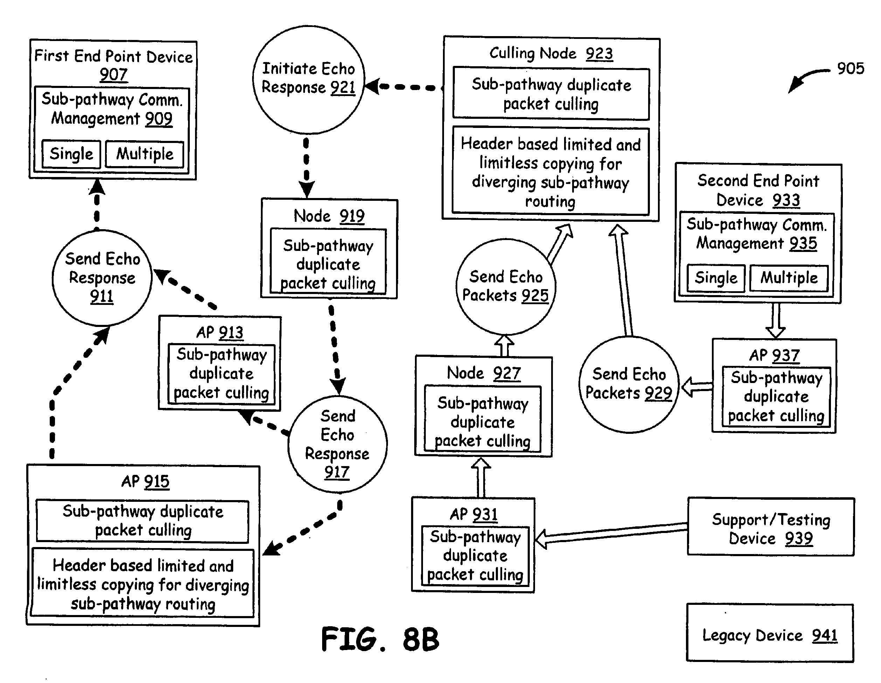

The processing circuitry then sends the test packet via communication interfaces to the second end-point device, for example. As illustrated, a typical end-point device may have a plurality of communication interfaces, each of which is connected to access points of one or both of an ISP and a public switched telephone network service provider. Culling nodes (described with reference to the **FIGs. 8A** and **8B**) gather the diverging sub-pathway characteristics from each of the preceding nodes at a convergence point. That is, the culling nodes collect all of the early and late arriving command packets via various diverging nodes and this information is copied into the data field echo cloning command packets and returned back to the first end-point device for analysis.

When pathway characteristics and divergence instructions of a test packet, e.g., an echo cloning command packet, arrives at a node, diverging sub-pathway characteristic among other information is gathered and either directly sent back to originating end-point device or copied into test packet before further forwarding through one or more of the divergent sub-pathways. At succeeding culling nodes or at the second end-point device, these converging, early and late arriving test packets, via various pathways, are collected and processed locally or sent back to the first end-point device for pathway analysis processing. Legacy phones may not be able to perform pathway analysis routines, here the culling nodes and the access point of the second end-point device (legacy device) handles the pathway analysis routines as mentioned above.

The divergence instructions may or may not limit sub-pathway copying, hereinafter "degrees of freedom limits." As may be appreciated, an instruction to copy a packet to all available output ports that support a pathway to a destination address may result in too many copies flowing through too many sub-pathways. To address this concern, degree of freedom limits can be used to control the amount of divergence during pathway analysis, at each node. Further, the information regarding error rate at each node provides a means for analysis, for the first end-point device. Signal strength may be applicable to certain segments (sub-pathway) of the pathway to the second end-point device, such as between the first end-point device to the access point or between access point and second end-point device. Low signal strength along a segment of a communication pathway may cause higher error rate, for example. Further, bandwidth limitations of some segments of the pathways may cause delays in voice or data transfer to the second end-point device.

Once the process of sending, for example, an echo cloning command packet and retrieving the packets back from the culling nodes, access points or the second end-point device is completed, the processing circuitry of the first end-point device analyzes the retrieved echo response information. If a statistical analysis is necessary, the processing circuitry may send multiple echo cloning command packets and retrieve the echo responses and store responses in storage for analysis. The echo response retrieved may contain information such as node addresses along each of the communication pathway to the second end-point device, time delay information, information about packets being dropped because of network congestion, information regarding asymmetric path (half-duplex), potential trouble spots in the path, available bandwidth and size of the pipe per hop. The cost of usage of each communication pathway may be calculated by the processing circuitry, based upon the information in the echo response.

The selection of one or more communication pathways for voice or data packets exchange between the first end-point device and the second end-point device may occur immediately after the pathway analysis, or based upon the stored pathway analysis information. The selection of one or more communication pathways may be arranged to take place manually or automatically. In manual selection, the user is provided with audiovisual pathway analysis presentation and provided with keys to select a communication pathway based on overall quality of voice or data packets exchange, or on the basis of error rate, signal strength, bandwidth and/or cost. The overall quality of voice or data packets exchange may also include the criteria of characteristic of diverging sub-pathway characteristic. In automatic selection, criteria may be preset by the manufacturer of the end-point device or threshold for overall quality of voice or data packets exchange, error rate, signal strength, bandwidth and/or cost may be programmed by the user.

Further, pathway control command instructions (or packet header routing control enhancements) are inserted into the header of the voice or data packets, for controlling communication pathways, that is, for routing the data along one or more of selected pathways. These pathway control commands are constructed by the processing circuitry based upon the pathway analysis and the resulting selection of one or more communication pathways. They direct the access points, Internet service providers and the nodes in the Internet backbone core to guide the voice or data packets along the selected communication pathways.

The selection and control of one or more communication pathways, regarding both forward flow and return flow of voice or data packets between first and second end-point devices, may be done by the first end-point device alone or the second end-point device alone. Alternatively, the control may be based upon collaboration between the first end-point device and the second end-point device. For example, the voice or data packets flow from first end-point device to the second end-point device may be controlled by the first end-point device, while the return flow may be controlled by the second end-point device.

The audiovisual pathway analysis presentation to the user may include a graphical display and/or an audio presentation. The display facilitates user in the process of selecting a communication pathway for voice or data transfer between the first end-point device and the second end-point device. The graphical displays may present the following pathway analysis information, among others, regarding available communication pathways: (a) display graphically overall divergence and convergence of communication pathways to the second end-point device, using each of the communication interface; (b) indicate graphically and quantitatively the Quality Of Service Index (QOS Index) of each of the communication pathways; (c) indicate when Quality Of Service Index (QOS Index) of a communication pathway is below a quality threshold, for each of the communication pathways; (d) indicate signal strength in each segment of each of the communication pathways; (e) indicate bandwidth limitations of each segment of each of the communication pathway; and (f) indicate usage cost of each of the communication pathways. Alternatively, the visual presentation may be in a table format, for the ease of comparison. Further, the user interface may provide the user keys to select a desired communication pathway, if manual selection is chosen.

In one embodiment, the first end-point device may be a desktop Internet phone 191 attempting to communicate with a second end-point device that is a cell phone 185. The desktop Internet phone 191 has a plurality of communication interfaces coupling with both Internet access points 118, 119 and public switched telephone network 109. Similarly, the cell phone has a plurality of communication interfaces, coupling with Internet access points 116, 117 and public switched telephone network 107. When an occasion for pathway analysis occurs, such as the user initiating pathway analysis before beginning communication with the cell phone 185, the processing circuitry of the desktop Internet phone 191 constructs an echo cloning command packet and sends it to the cell phone via the communication infrastructure 105. The communication interfaces of the desktop Internet phone 191 are communicatively coupled with PSTN 109, access points 118 and 119, therefore as a first step, the echo cloning command packet reach the PSTN 109, access points 118 and 119 via corresponding communication links such as WLAN and/or LAN links.

The access point 118, for example, copies all of the necessary information such as IP address, date-time stamp, diverging sub-pathway characteristics, signal strength of the preceding communication link on to the data field, and sends them along each of the connected ISP such as ISP 132 and 133. The diverging sub-pathway characteristics may include IP addresses of the attached nodes, signal strength and bandwidth limitations of the communication links to the attached nodes. The same process repeats at the ISP 132 and 133. The echo cloning command packet, for example, may flow through ISP 133, BAP 162, 163 and 164 and into the IB 153 and 154. Finally, via IB 151 and 152, ISP 143 and 142, BAP 172 and access points 116 and 117, the echo cloning command packet reach cell phone 185.

Before reaching the cell phone 185, the access points 116 and 117 collect, all of the converging (early and late arriving) echo cloning command packets and send them back to the desktop Internet phone 191. Similarly, the cell phone 185, if equipped with the ability to control the communication pathway, may send back the converging echo cloning command packets (echo response information). If on the contrary, the cell phone 185 is a legacy phone, it may not send back echo response information. Further, the culling nodes (described with reference to the **FIGs. 8A** and **8B**) which may be any of the ISPs located along the communication pathways or may exist in the IBs 151 through 154 also send back echo response information to the desktop Internet phone 191. If the constructed echo cloning command packets do not contain degree of freedom limitations, then the echo cloning command packets may diverge in to may unnecessary access points and nodes, at some point where they do not converge, they are discarded.

Finally, the desktop Internet phone 191 collects all of the echo response information from culling nodes, convergence points and the cell phone 185 and analyzes the information. Based upon this information, a communication pathway map is constructed and an audiovisual presentation is provided via user interface of the desktop Internet phone, together with QOS index, cost index, and other information. The user may manually select a communication pathway, or in automatic mode, the processing circuitry may select one or more communication pathways based upon preset criteria, for communication. The selection may also occur in conjunction with cell phone 185, after information exchanges with the cell phone 185. After selection of communication pathways, the desktop Internet phone 191 constructs pathway control command instructions and inserts them into the header of each of the voice packets exchanged, such that the voice packets are routed along desired communication pathways. In another embodiment, the first end-point device may be a personal computer 181 trying to download a file from a server and the analysis, selection, and control of communication pathways follow similar process as explained in the embodiment mentioned above.

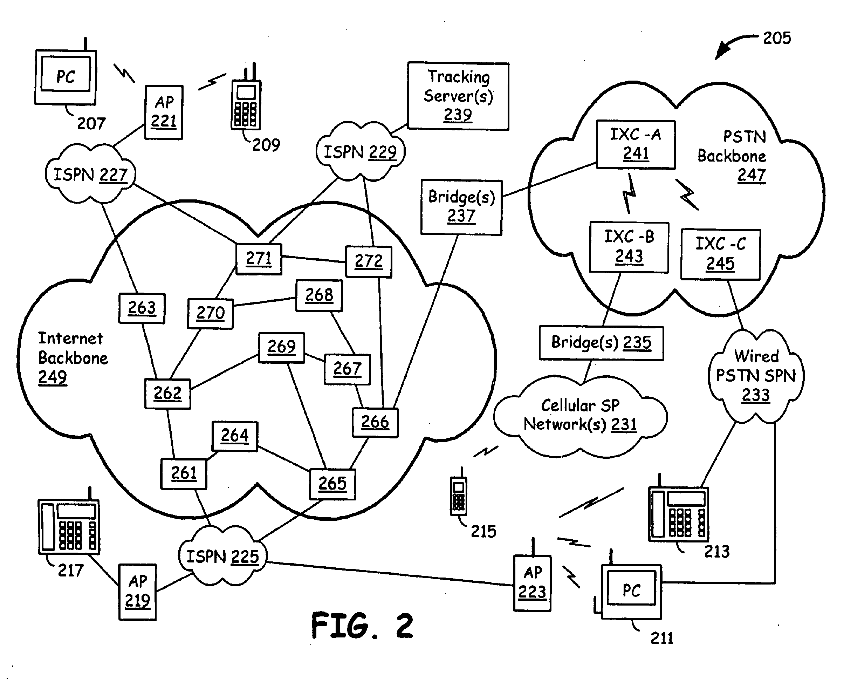

**FIG. 2** is another schematic block diagram of a communication infrastructure 205 that allows controlling of pathways, illustrating a plurality of end-point devices that perform analysis, selection and control of communication pathways. The communication infrastructure consists of an Internet backbone 249 with a plurality nodes 261-272 and PSTN backbone consisting among other things, Interexchange Carriers (IXC) 241-243 and 245. Within the communication infrastructure 205, a plurality of service providers support the plurality of end-point devices making available a plurality of packet switched network pathways and a plurality of circuit-switched telephone network pathways.

Prior to attempting voice or data packets exchange, each end-point device analyzes the available communication pathways, selects and controls, either automatically or through user interaction, one or more of the pathways based on several factors, such as quality of service and cost. More specifically, each end-point device 207, 209, 211, 213, 215 or 217 have two or more options for establishing and maintaining communication pathways between any of the other end-point devices 207, 209, 211, 213, 215 and 217. Each call pathway originating from a first end-point device flows upstream through: a) one of access points 219, 221 or 223; b) an access point (not shown) within one of cellular service provider networks 231; or c) an access point (not shown) within a wired PSTN (Public Switched Telephony Network) service provider network 233. From there, each pathway continues through a service provider network, e.g., Internet service provider networks 225, 227 and 229, the wired PSTN service provider network 233, or the one of the cellular service provider networks 231 and bridges 235 or 237, to an Internet backbone 249 or PSTN backbone 247, completing the upstream portion of the pathway.

Before beginning the downstream portion of the pathway, bridging may be required to enter the network backbone that supports a second end-point device. For example, the call pathway may continue via bridges 235 from the Internet backbone 249 to the PSTN backbone 247 or vice versa. Thereafter, for the downstream portion, the call pathway will flow from the Internet backbone 249 or the PSTN backbone 247: a) to the Internet service provider networks 225, 227 and 229 and on to the access points 219, 221; b) through the bridges 235 or 237 to one of the cellular service provider networks 231; or c) to the wired PSTN service provider network 233. From there, the call pathway passes and terminates with the second end-point device.

For every voice or data packets exchange between the first and second end-point devices, there are two call pathways employed. The first pathway delivers voice or data packets from the first end-point device to the second end-point device. Similarly, the second pathway delivers voice or data packets from the second end-point device to the first end-point device. The first and second pathways might flow through the same underlying path yet need not.

The Internet backbone 249, PSTN backbone 247, cellular service provider networks 231, and wired PSTN service provider networks 233 may provide multiple nodes therein arranged to form one or more paths there through. For example, the Internet backbone 249 is a combination of routers and switches (equipment or "nodes") 261-272 that together form the routing backbone for packets through the Internet. The access points 219, 221 and 223, as illustrated, support wired Local Area Networks (LAN), wireless Local Area Networks (WLAN) and wired or wireless point-to-point links. Wireless transmission signal strength, error rates, noise, WLAN/LAN loading, WLAN/LAN bandwidth, forwarding delays, service guarantees, and link costs are exemplary concerns associated with these pathway nodes. Similar concerns are associated with the wired and wireless (cellular) circuitry switched access points, i.e., the cellular service provider networks 231 and the wired PSTN service provider network 233. The Internet service provider networks 225, 227 and 229 inject further of the same concerns. Absent link costs, all of the aforementioned concerns are herein referred to as "quality of service concerns."

The pathway through the Internet backbone 249 consists of a plurality of nodes 261-272 (e.g., switches and routers) arranged to provide an internal pathway through the Internet backbone 249. That is, the voice or data packets either reach the second end-point device via the Internet service provider networks 225, 227 and 229 and the access points 219, 221 and 223 or the bridges 235 and 237. As with other portions of the call pathway, the Internet backbone 249 introduces further quality of service concerns. For example, in this segment of call pathway, voice or data packets may be lost, delayed, or reproduced incorrectly during retransmission. The bridges 235 and 237 introduce yet other quality of service concerns as also do the cellular service provider networks 231 and the wired PSTN service provider networks 233. A series of overall quality of service index are constructed for each direction of the call pathway, even though one direction might suffice. Overall pathway costs are also summed.

Thus, the pathway analysis results provide overall QOS index and cost for each communication path, thus facilitating selection and control of communication pathway. The results of the pathway analysis are presented to the user in the form of one or a few easily understood Quality of Service (QOS) indications. Along therewith, costing information is also displayed. From the quality of service indications and costing information, a user of the underlying end-point device may select a communication pathway and allow the end-point device to control the communication pathway, that is, to route the packets along the selected communication pathway. Such indications and costing information may be displayed on a screen of the end-point device.

**FIG. 3** is a block diagram 305 illustrating an end-point device circuitry constructed in accordance with the embodiments of **FIGs. 1** and/or **2** of the present invention. The illustrated end-point device circuitry 307 supports wired and wireless Internet telephony, wired public switched telephone network telephony and cellular telephony, and may correspond at least in part to any of the end-point devices herein. In other embodiments, the end-point device of the present invention may include fewer or more components than are illustrated as well as lesser or further functionality, and may adopt to the data packets exchange functionality rather than voice packets exchange. In other words, the illustrated end-point device is meant to merely offer one example of possible functionality and construction in accordance with the present invention.

The end-point device circuitry 307 of an end-point device 305 may be any of the two or more end-point device circuitry that exchange voice or data packets and the circuitry may in part or full be incorporated into any of the end-point devices described with reference to the FIG. 1, servers, or handheld devices. The end-point device circuitry 307 generally includes processing circuitry 309, storage 311, user interfaces 317, and communication interfaces 323. These components communicatively coupled to one another via one or more of a system bus, dedicated communication pathways, or other direct or indirect communication pathways. Host processing circuitry 309 may be, in various embodiments, a microprocessor, a digital signal processor, a state machine, an application specific integrated circuit, a field programming gate array, or other processing circuitry. Storage 311 may be random access memory, read-only memory, flash memory, a disk drive, an optical drive, or another type of memory that is operable to store computer instructions and data. The storage includes pathway analysis 313 and pathway control 315 applications, to support the functionality described in this invention.

The user interfaces 317 may include a display, audio interfaces, and keypad interfaces. The audio interfaces may include speakers, microphone, and/or a handset, and wireless headset interfaces. Display of the user interfaces 317 may be a conventional LCD display, an LED display, a touch based display, or another display. Wireless headset interface of the user interfaces 317 may be a WPAN interface such as a Bluetooth interface, a proprietary wireless headset interface, or another wireless interface. Handset of the user interfaces 317 enables a user to interact with the components of the bridging telephone and includes a speaker and a microphone. The handset may be movable with respect to the rest of the components of the end-point device 305. Keypad interface of the user interfaces 317 enables the user to communicate with another client device or support servers via keystroke inputs. In other embodiments, a microphone and a speaker may replace the handset. Such is the case when the end-point device comprises a wireless telephone.

Communication interfaces 323 include a wired public (circuit) switched telephone network interfaces 327, cellular telephone network interfaces 333, wired Internet interfaces 331, wireless Internet interfaces 329 and processing circuitry 325. The wired public switched telephone network interfaces 327 support wired links to public switched telephone networks. The cellular telephone network interfaces 333 support wireless links to cellular networks. The wired Internet interfaces 331 couple to the packet switched networks such as intranet and Internet networks. The wireless Internet interfaces 329 couple to the packet switched networks wirelessly via links such as Wireless Local Area Networks (WLAN). The processing circuitry 325 may exist in communication interfaces 323 as an independent unit as illustrated or may exist as a part of each of the interfaces 327, 333, 331 and 329.

The processing circuitry, one or both of the processing circuitry 309 and the processing circuitry 325, controls the operations of the pathway analysis, pathway selection, and pathway control before and/or during the exchange of voice or data packets. In performing operations, the processing circuitry 309 and/or 325 determines an occasion for pathway analysis and performs the logic involved in the applications of pathway analysis 313. Once the pathway analyses are completed, the results are stored in storage 311 and the processing circuitry 309 and/or 325 may use these results as required. The processing circuitry 309 and/or 325 then obtains pathway selection control signals for voice or data packet exchange through the user interaction with the keypad interface or automatically based upon considerations of the quality of communication pathway and/or cost. Based upon these pathway selection control signals or pre-programmed automatic pathway selection instructions, the processing circuitry 309 and/or 325 enables the public switched telephone network interfaces 327 and/or 333 and the packet switched network interfaces 329 and/or 331 to select a communication pathway. The processing circuitry 309 and/or 325 then inserts pathway control command instructions in the header of each of the voice or data packets to route the packets along the selected communication pathways.

The processing circuitry 309 and/or 325 determines diverging sub-pathway characteristics of an Internet communication pathway, among other characteristics of nodes and sub-pathways, by sending echo cloning command packets in to the communication infrastructure. The echo response from various access points, nodes and the destination end-point devices are then analyzed by the processing circuitry 309 and/or 325 according to a logic embedded in the pathway analysis 313 application. The processing circuitry 309 and/or 325 may also request assistance of the servers (not shown) in the communication infrastructure in the process of pathway analysis of the Internet communication pathways, if programmed to do so. In addition, the processing circuitry 309 and/or 325 may generate diverging sub-pathway characteristics as well as other pathway characteristics of PSTN pathways by retrieving such information from PSTN servers. Such characteristics are scaled for comparison with Internet service characteristics, for example, by generating a QOS factor for such PSTN pathways or pathway portions for comparison to QOS factors for Internet pathways or pathway portions. Along with such QOS factors, costing information for each pathway, whether PSTN or Internet in whole or in part, can be calculated.

**FIG. 4** is a block diagram 404 illustrating detailed contents of storage 411 in the end-point device circuitry shown in **FIG. 3** of the present invention. More specifically, the storage 411 contains, among other contents, routines, and/or applications that perform the pathway analysis, selection, and control of communication pathways, either by themselves or in exchange with other end-point devices or servers. The routines and/or applications contained in the storage 411 include applications of pathway analysis 413, pathway control 425 and outgoing and incoming pathway control 441. Pathway analysis 413 further contain echo cloning command packets routines 415, error rate analysis routines 417, signal strength analysis routines 419 and bandwidth analysis routines 421. Pathway control 425 further contains packet header routing control enhancements routines 427, degrees of freedom control routines 429 and user presentation selection routines 431 and auto-pathway selection routines 433. Similarly, outgoing and incoming pathway control 441 further contain routines of controlling sending pathway 443, controlling receiving pathway 445, controlling sending pathway in exchange with the other device 447, controlling receiving pathway in exchange with the other device 449 and controlling pathway when in communication with a legacy device 451. These routines and/or applications, when executed by the processing circuitry, allow the end-point device to analyze, select, and control communication pathways.

The pathway analysis application 413 is executed by the processing circuitry when an occasion for pathway analysis occurs, such as when a control signal is received via user interface before placing a call to another end-point device or before exchange of data with a server. When such an occasion occurs, the pathway analysis application 413 executes the routines of echo cloning command packets 415 such that an echo cloning command packet is constructed. By executing the routine of 415, the pathway analysis application 413 makes it possible for the processing circuitry to construct appropriate echo cloning command packet and send it to a destination end-point device. The constructed echo cloning command packet consists instructions to the access points, nodes, culling nodes and the destination end-point device to send back an echo response with information about diverging sub-pathway characteristics, statistics related to errors, sub-pathway signal strength and sub-pathway bandwidth. Once an echo response is obtained from the access points, nodes and the destination end-point device, the pathway analysis application 413 further executes error rate analysis routine 417, signal strength analysis routine 419, and bandwidth analysis routine 421. In effect, by executing these three routines, the pathway analysis application constructs a map of communication pathways together with analyzed results and presents them to the user in the form of an audiovisual presentation.

Pathway control application 425, when executed by the processing circuitry, facilitates user selection of communication pathways by providing audiovisual presentation of pathway analysis results. For this, the pathway control application 425 executes the routines user presentation selection 431. Further, this application provides provision for user to set criteria for auto selection of communication pathways and selects pathways automatically by utilizing results of pathway analysis, by executing auto-pathway selection routine 433. Once one or more pathways are selected for exchange of voice or data packets, the pathway control application 425 executes the routines of routing control enhancements 427 and degrees of freedom control 429. These routines 427, 429 construct appropriate instructions, based upon the selection of communication pathways, to be inserted into the header of every voice or data packet exchanged.

Further, the outgoing and incoming pathway control application 441 inserts appropriate routing control enhancement instructions into the header of each of the voice or data packets, by executing the routine controlling the sending pathway 443. These instructions allow access points and nodes in the communication infrastructure to direct the packets along selected communication pathways, during the forward flow of from the sending end-point device to the destination end-point device. Further, by executing the controlling receiving pathway routine 445, the processing circuitry send appropriate routing control enhancement instructions to the destination end-point device or the access point to which the destination end-point device is connected. These instructions are inserted by the destination end-point device or the corresponding access point such that the voice or data packets are routed along selected path during return path. The routines controlling receiving pathway in exchange with the other device 449 and controlling pathway when in communication with a legacy device 451, allow sending end-point device to communicate with the destination end-point devices or the access point to which a legacy device is connected and select and control forward and return communication pathways.

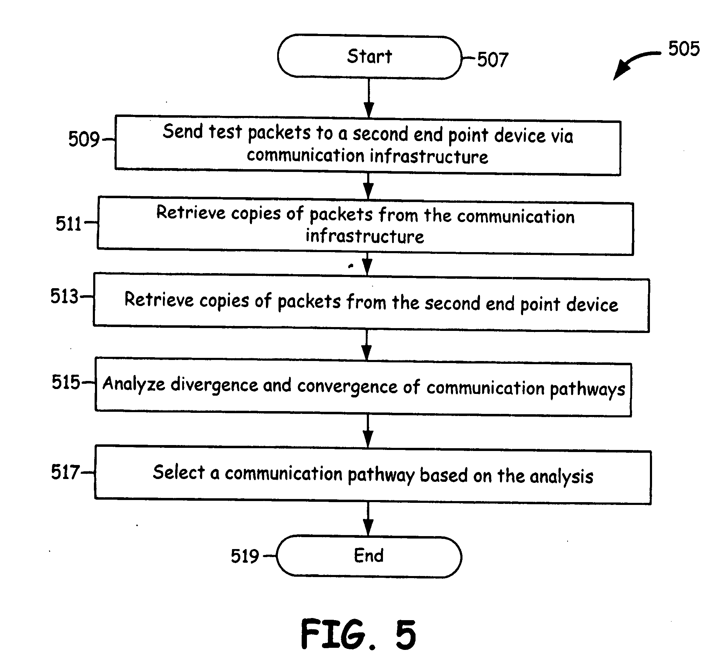

**FIG. 5** is a flow diagram illustrating the method 505 performed by an end-point device that perform analysis, selection and control of communication pathways, during an operation of analysis and selection of Internet communication pathways. The method 505 starts at a start block 507, when the end-point device begins pathway analysis. Then, at a next block 509, the end-point device sends test packets (echo cloning command packets) to a second end-point device via communication infrastructure. The test packets from the first end-point device passes through access points and nodes in the communication infrastructure, at each access point and node creating copies of the test packets and collecting diverging sub-pathway characteristics, among other characteristics.

Then, at a next block 511, the end-point device retrieves copies of the test packets from various culling nodes in the communication infrastructure. These retrieved packets contain, in the data field, information regarding diverging sub-pathway characteristics at each node such as delay along each communication sub-pathway. Further, the retrieved packets contain other information such as sub-pathway and node error rates, sub-pathway signal strength and bandwidth limitations. Then at a next block 513, the test packet copies from the second (destination) end-point device is retrieved.

At a next block 515, divergence and convergence of communication pathways is analyzed. This analysis provides a map of all possible communication pathways to the second end-point device, together with sub-pathway information such as overall QOS, overall cost of usage of each communication pathway and error rate, bandwidth limitations of each sub-pathway. Once the analysis is complete and presented to the user, manually or automatically, a communication pathway is selected based upon the analysis, in the next block 517. The method ends at a next block 519.

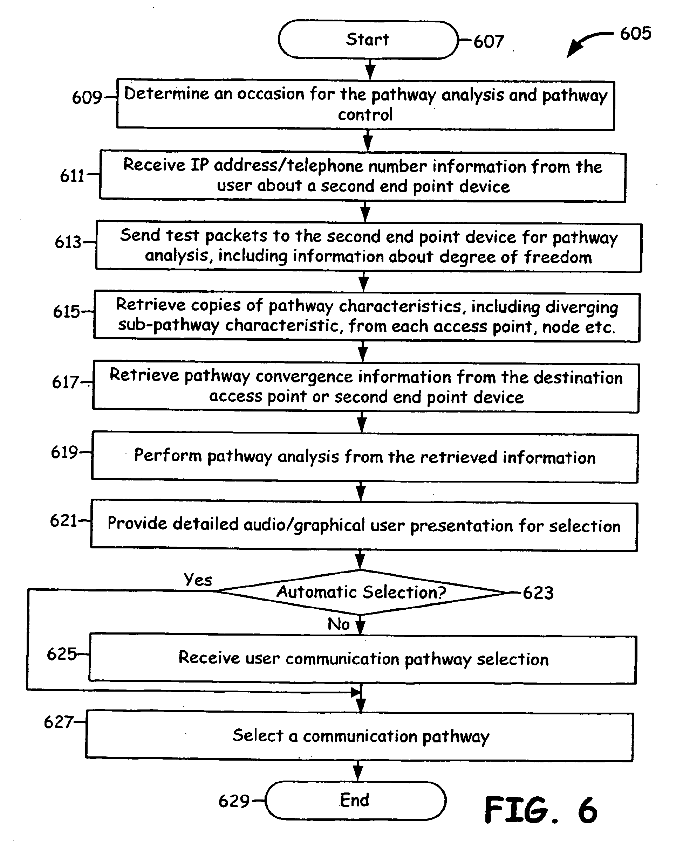

**FIG. 6** is a flow diagram illustrating the method 605 performed by an end-point device during an operation of analysis and selection of Internet communication pathways shown in **FIG. 5**, with analysis of pathways shown in detail. The method 605 begins at a start block 607 and at a next block 609, the end-point device determines an occasion for the pathway analysis and pathway control. The occasion may come when a user initiates such a process or when a voice packets or data packets exchange initiated. At a next block 611, the end-point device receives via user interface, IP (Internet Protocol) address or telephone number of a second (destination) end-point device. At a next block 613, the end-point device constructs test (echo cloning command) packets and sends it to the second end-point device, for pathway analysis. The test packets also contain information about degree of freedom limitations such that each node that receives these test packets limit divergence to only a few succeeding nodes. The nodes that receive test packets beyond divergence limitation simply discard the test packets and do nothing about it.

At a next block 615, the end-point device retrieves copies of pathway characteristics (echo responses) such as sub-pathway characteristics, error rate, bandwidth limitations and signal strength. These echo responses may come only from those nodes, which collect early, and late arriving test packets via various pathways, e.g., by culling nodes, destination access points, and the second end-point device. At a next block 617, the end-point device retrieves pathway convergence information from the destination access point and/or second end-point device.

At a next block 619, the end-point device performs pathway analysis based on the above-mentioned retrieved echo response information. If a statistical analysis is necessary, the processing circuitry may send multiple echo cloning command packets and retrieve the echo responses and store responses in storage for analysis. The echo response retrieved may contain information such as node addresses along each of the communication pathway to the second end-point device, time delay information, information about packets being dropped because of network congestion, information regarding asymmetric path (half-duplex), potential trouble spots in the path, available bandwidth and size of the pipe per hop. The cost of usage of each communication pathway may be calculated by the processing circuitry, based upon the information in the echo response.

At a next block 621, the end-point device provides a detailed audiovisual (audio and graphical or in table format) presentation to the user, to facilitate selection of a communication pathway. At a next decision block 623, the end-point device determines if automatic selection of communication pathway is enabled. If automatic selection is enabled, the end-point device may not provide presentation, but may indicate the pathway selected via visual display. If not, at a next block 625 the end-point device receives user selection via user interface. If yes at decision block 623, the user selection step of block 625 is skipped. At a next block 627, the end-point device selects a communication pathway and the method 605 ends at a next block 629.

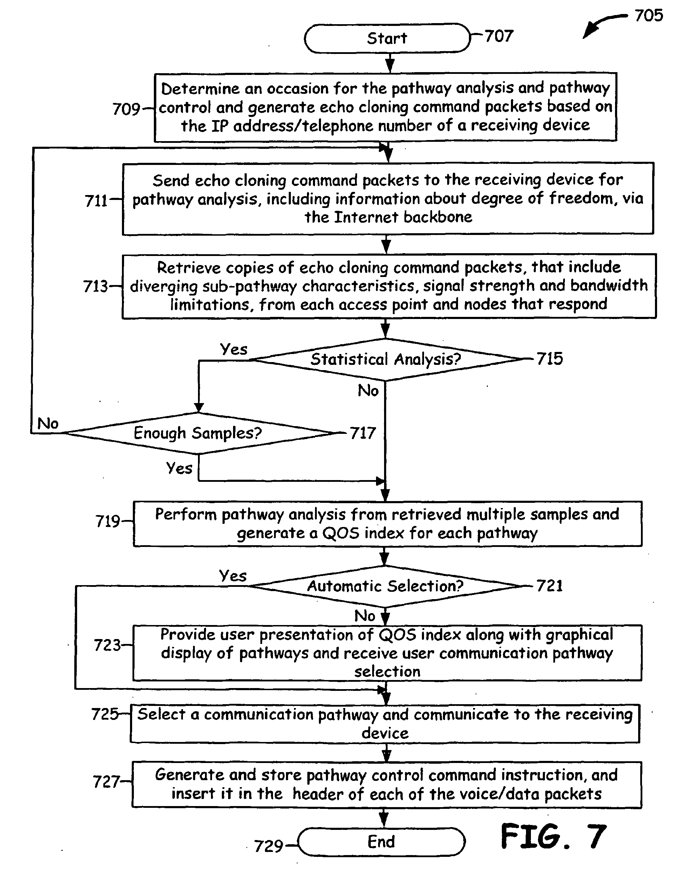

**FIG. 7** is a flow diagram illustrating the method 705 performed by an end-point device during an operation of control of Internet communication pathways. The method 705 begins at start block 707. At a next block 709, the end-point device determines an occasion for pathway analysis and pathway control and generate echo cloning command packets (test packets) based on IP address/telephone number of a receiving device. At a next block 711, the end-point device sends echo cloning command packets to the receiving device for pathway analysis, including information about degree of freedom, via Internet backbone. These echo cloning command packets traverse through access points and nodes, and through diverging sub-pathways, and at each node collecting sub-pathway characteristics, and finally converging toward the receiving device.

At a next block 713, the end-point device retrieves copies of echo cloning command packets that include diverging sub-pathway characteristics, signal strength, error rate and bandwidth limitations from each of the access points that respond. At a next decision block 715, the end-point determines whether a statistical analysis is necessary. Statistical analysis may require many samples of the above-mentioned information. If yes at block 715, the end-point device repeats steps of blocks 711 and 713 several times and each time that it decides if there are enough samples, at a next decision block 717. Once enough samples are collected, at a next block 719, the end-point device performs pathway analysis from the retrieved samples and generates QOS index and cost index for each pathway. These indexes help determine one more pathways among the diverging pathways, nodes from which echo responses are collected.

At a next decision block 721, the end-point device determines if automatic pathway selection is enabled. If not, at a next block 723, the end-point device provides user presentation of pathway maps (graphical display of pathway maps), QOS Indexes and cost indexes and receives user selection of one or more pathways via user interfaces. If automatic selection is enabled at decision block 721, the end-point device skips the step of block 723. Then at a next block 725, the end-point device selects one or more communication pathways and communicates this information to the receiving device. Then, at block 727, the end-point device generates and stores pathway control command instructions and inserts them into the header of each voice/data packet while communicating with the receiving device. The method ends at a next block 729.

**FIG. 8A** is a block diagram 805 illustrating an embodiment of flow of control command packets during pathway analysis from a first end-point device to a second end-point device, a support/testing device or a legacy device, in a communication infrastructure consisting access points (AP) and nodes. In actual cases, there may be many more access points and nodes and diverging sub-pathways than illustrated. The first end-point device 807 consists of sub-pathway communication management unit 809, which further consists of single pathway management or multiple pathway managements. The first end-point device constructs command packets (echo cloning command packets) and initiates pathway analysis 811 by sending these command packets to a plurality of access points 813, 815 that it is communicatively coupled with. In the illustration two access points 813, 815 are shown, there may be more or less in reality.

The access point 813 consists of sub-pathway duplicate packet culling unit that allows it to copy sub-pathway characteristics in to the data filed of command packets and further send it 817 to a plurality of connected nodes. Only one connected node 819 is shown in illustration. Similarly, another access point 815 connected to the first end-point device 807 has sub-pathway duplicate packet culling unit and header based limited and limitless copying for diverging sub-pathway routing unit. The limited (depending on the degree of freedom limit) and limitless copying for diverging sub-pathway routing unit copies incoming command packets and sends 817 them to some or all of the connected nodes. Again, only one connected node 819 is shown in illustration. Similar units of sub-pathway duplicate packet culling and/or header based limited and limitless copying for diverging sub-pathway routing may exist in all of the nodes 819, 823 and 827 and access points 813, 815, 831, and 837. These nodes and access points allow the end-point devices to gather and analyze sub-pathway characteristics.

The node 819 sends 821 the command packets to the culling node 823 and is finally routed 829 to the second end-point device 833. A similar process occurs when analyzing and controlling the communication pathways to a legacy device 841. However, the access point 831, which is connected to the legacy device 841, may help the first end-point device 807 in the process of analysis and controlling of communication pathways. A support/testing device 839 assists the first end-point device 807 in testing the pathway analysis and pathway control functionalities.

**FIG. 8B** is a block diagram 907 illustrating an embodiment of the flow of echo response packets during pathway analysis from a support/testing device, nodes or access points (AP) to a first end-point device, in a communication infrastructure. In actual cases, there may be many more access points and nodes and diverging sub-pathways than illustrated. The early and late arriving echo cloning command packets are gathered by various access points such as 937 and 931, culling nodes such as 923 and second (destination) end-point device 933.

The return flow of echo response packets may take place from the second end-point device 933 via access point 937, culling node 923, and node 919 and via access point 913 back to the first end-point device 907. In this case, the data filed of echo response packet contains information regarding the IP addresses of the second end-point device 933, culling node 923, node 919, access points 913 and 915. Further, the data field may also contain sub-pathway characteristics, error rate, bandwidth limitations, signal strength etc. regarding the sub-pathways, that is, the pathway from 933 to 937, 937 to 923, 923 to 919, 919 to 913, and 913 to 907. This information are copied on to the data filed while they pass through these nodes during echo cloning command packet flow from first end-point device 907 to the second end-point device 933.

Besides the echo response packets flowing from second end-point device 933 to the first end-point device 907, echo response packets are also returned from various culling nodes such as the culling node 923. In case of a legacy device such as 941, there may not be any echo response from the device 941, instead the echo response is provided from the access point 931. Similarly, while controlling a pathway from the first end-point device 907 to a legacy device 941, the access point 931 may insert pathway control command instruction in the header of the voice or data packets.

As one of average skill in the art will appreciate, the term "communicatively coupled", as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the scope of the invention, as limited only by the scope of the appended claims.

## Claims

1. A telephone network comprising:
a packet switched infrastructure comprising a backbone network (249), a first access point (221), and a second access point (223);
a first end-point device (209) communicatively coupled to the backbone network via at least the first access point; and
a second end-point device (211) communicatively coupled to the backbone network via at least the second access point, the first end-point device adapted to:
send at least one test packet including divergence instructions to the packet switched infrastructure,
identify diverging sub-pathways within the backbone network,
receive diverging sub-pathway characteristics, the diverging sub-pathway characteristics including at least one of error rates, signal strengths, bandwidths and link costs in the diverging sub-pathways, and
select at least one communication pathway between the first end-point device and the second end-point device, the selected communication pathway comprising at least one of the identified diverging sub-pathways, wherein the selection of the at least one communication pathway is based at least in part on the diverging sub-pathway characteristics.

2. The telephone network of claim 1, wherein the backbone network comprises a plurality of network nodes (261-272) having a plurality of output ports, a network node of the plurality of network nodes configured to:
receive the test packet;
copy the test packet; and
send copies of the test packet through at least two output ports according to the divergence instructions.

3. The telephone network of claim 2, wherein the test packet and the copies of the test packet comprise a copy count field which limit the total number of copies of the test packet in the backbone network.

4. A method used by a first end-point device to deliver a media packet to a second end-point device in an Internet network, the Internet network having a network node and the network node having a plurality of output ports, the method comprising:
constructing a test packet that comprises a divergence instruction for the network node;
delivering the test packet to the Internet network;
receiving a plurality of pathway characteristics from the Internet network in response to the delivery of the test packet, the plurality of pathway characteristics including at least one of error rates, signal strengths, bandwidths and link costs in a pathway;
selecting a route pathway based on the plurality of pathway characteristics;
constructing a media packet that comprises a routing instruction for the network node to control forwarding of the media packet in conformance with the route pathway; and
delivering the media packet to the Internet network.

5. The method of claim 4, further comprising:
copying the test packet received at the network node; and
sending copies of the test packet through at least two output ports according to the divergence instruction.

6. The method of claim 5, wherein the test packet and the copies of the test packet comprise a copy count field which limit the total number of copies of the test packet in the Internet network.

## Patentansprüche

1. Telefon-Netzwerk mit:
einer paketgeschalteten Infrastruktur, die eine Hauptleitung (249), einen ersten Zugangspunkt (221) und einen zweiten Zugangspunkt (223) aufweist;
einer ersten Endpunktvorrichtung (209), die über wenigstens den ersten Zugangspunkt kommunikativ mit der Hauptleitung gekoppelt ist;
einer zweiten Endpunktvorrichtung (211), die über wenigstens den zweiten Zugangspunkt kommunikativ mit der Hauptleitung gekoppelt ist, wobei die erste Endpunktvorrichtung so ausgelegt ist, dass sie:
wenigstens ein Testpaket, das Divergenzbefehle enthält, an die paketgeschaltete Infrastruktur sendet;
divergierende Unterpfade in der Hauptleitung identifiziert;
Eigenschaften der divergierenden Unterpfade empfängt, wobei die Eigenschaften der divergierenden Unterpfade wenigstens eines enthalten von Fehlerraten, Signalstärken, Bandbreiten und Verbindungskosten in den divergierenden Unterpfaden; und
wenigstens einen Kommunikationspfad zwischen der ersten Endpunktvorrichtung und der zweiten Endpunktvorrichtung auswählt, wobei der ausgewählte Kommunikationspfad wenigstens einen der identifizierten divergierenden Unterpfade aufweist, wobei die Auswahl des wenigstens einen Kommunikationspfads wenigstens teilweise auf den Eigenschaften der divergierenden Unterpfade basiert.

2. Telefon-Netzwerk nach Anspruch 1, wobei die Hauptleitung eine Vielzahl von Netzwerkknoten (261 - 272) mit einer Vielzahl von Ausgangsports aufweist, wobei ein Netzwerkknoten der Vielzahl von Netzwerkknoten so konfiguriert ist, dass er:
das Testpaket empfängt;
das Testpaket kopiert; und
Kopien des Testpakets durch wenigstens zwei Ausgangsports gemäß den Divergenzbefehlen sendet.

3. Telefon-Netzwerk nach Anspruch 2, wobei das Testpaket und die Kopien des Testpakets ein Kopienzählfeld enthalten, das die Gesamtzahl der Kopien des Testpakets in der Hauptleitung begrenzt.

4. Verfahren, das von einer ersten Endpunktvorrichtung verwendet wird, um ein Medienpaket an eine zweite Endpunktvorrichtung in einem Internet-Netzwerk zu übertragen, wobei das Internet-Netzwerk einen Netzwerkknoten hat und der Netzwerkknoten eine Vielzahl von Ausgangsports hat, wobei das Verfahren umfasst:
Konstruieren eines Testpakets, das einen Divergenzbefehl für den Netzwerkknoten enthält;
Liefern des Testpakets an das Internet-Netzwerk;
Empfangen einer Vielzahl von Pfadeigenschaften von dem Internet-Netzwerk im Ansprechen auf das Liefern des Testpakets, wobei die Vielzahl von Pfadeigenschaften wenigstens eines aufweist von Fehlerraten, Signalstärken, Bandbreiten und Verbindungskosten in einem Pfad;
Auswählen eines Routenpfads basierend auf der Vielzahl von Pfadeigenschaften;
Konstruieren eines Medienpakets, das einen Routing-Befehl für den Netzwerkknoten zum Steuern des Weiterleitens des Medienpakets in Übereinstimmung mit dem Routenpfad enthält; und
Liefern des Medienpakets an das Internet-Netzwerk.

5. Verfahren nach Anspruch 4, das des Weiteren umfasst:
Kopieren des an dem Netzwerkknoten empfangenen Testpakets; und
Senden von Kopien des Testpakets durch wenigstens zwei Ausgangsports gemäß dem Divergenzbefehl.

6. Verfahren nach Anspruch 5, wobei das Testpaket und die Kopien des Testpakets ein Kopienzählfeld enthalten, das die Gesamtzahl von Kopien des Testpakets in dem Internet-Netzwerk begrenzt.

## Revendications

1. Réseau téléphonique comprenant :
une structure à commutation de paquets comprenant un réseau central (249), un premier point d'accès (221) et un deuxième point d'accès (223) ;
un premier dispositif de point d'extrémité (209) couplé de manière communicative au réseau central par le biais au moins du premier point d'accès ; et
un deuxième dispositif de point d'extrémité (211) couplé de manière communicative au réseau central par le biais au moins du deuxième point d'accès, le premier dispositif de point d'accès étant apte à :
envoyer au moins un paquet de test comprenant des instructions de divergence à l'infrastructure à commutation de paquets,
identifier des voies partielles différentes au sein du réseau central,
recevoir des caractéristiques de voies partielles différentes, les caractéristiques de voies partielles différentes comprenant au moins l'un de taux d'erreur, de forces de signal, de largeurs de bande et de coûts de liaison dans les voies partielles différentes, et
sélectionner au moins une voie de communication entre le premier dispositif de point d'extrémité et le deuxième dispositif de point d'extrémité, la voie de communication sélectionnée comprenant au moins l'une des voies partielles différentes identifiées, dans lequel la sélection de l'au moins une voie de communication est basée au moins en partie sur les caractéristiques de voies partielles différentes.

2. Réseau téléphonique selon la revendication 1, dans lequel le réseau central comprend une pluralité de noeuds de réseau (261-272) ayant une pluralité de ports de sortie, un noeud de réseau de la pluralité de noeuds de réseau étant configuré pour :
recevoir le paquet de test ;
copier le paquet de test ; et
envoyer des copies du paquet de test à travers au moins deux ports de sortie en fonction des instructions de divergence.

3. Réseau téléphonique selon la revendication 2, dans lequel le paquet de test et les copies du paquet de test comprennent un champ comprenant un compteur du nombre de copies qui limite le nombre total de copies du paquet de test dans le réseau central.

4. Procédé utilisé par un premier dispositif de point d'extrémité pour livrer un paquet multimédia à un deuxième dispositif de point d'extrémité dans un réseau Internet, le réseau Internet ayant un noeud de réseau et le noeud de réseau ayant une pluralité de ports de sortie, le procédé comprenant les étapes consistant à :
construire un paquet de test qui comprend une instruction de divergence pour le noeud de réseau ;
livrer le paquet de test au réseau Internet ;
recevoir une pluralité de caractéristiques de voies en provenance du réseau Internet en réponse à la livraison du paquet de test, la pluralité de caractéristiques de voies comprenant au moins l'un de taux d'erreur, de forces de signal, de largeurs de bande et de coûts de liaison dans une voie ;
sélectionner une voie de cheminement sur la base de la pluralité de caractéristiques de voies ;
construire un paquet multimédia qui comprend une instruction de cheminement pour le noeud de réseau pour commander le transfert du paquet multimédia conformément à la voie de cheminement ; et
livrer le paquet multimédia sur le réseau Internet.

5. Procédé selon la revendication 4, comprenant en outre les étapes consistant à :
copier le paquet de test reçu au noeud de réseau ; et
envoyer des copies du paquet de test à travers au moins deux ports de sortie en fonction de l'instruction de divergence.

6. Procédé selon la revendication 5, dans lequel le paquet de test et les copies du paquet de test comprennent un champ comprenant un compteur du nombre de copies qui limite le nombre total de copies du paquet de test dans le réseau Internet.
